# EUROPÄISCHE PATENTSCHRIFT

(11) **EP 3 851 683 B1**
(45) Veröffentlichungstag und Bekanntmachung des Hinweises auf die Patenterteilung: **06.09.2023**
(21) Anmeldenummer: 21154986.0
(22) Anmeldetag: 13.07.2018
(51) Int. Cl.: F16B 5/00

(54) **BEFESTIGUNGSELEMENT, EINBAUELEMENT FÜR FAHRZEUGE UND FAHRZEUG**
FASTENING ELEMENT, INSTALLATION ELEMENT FOR VEHICLES, AND VEHICLE
ÉLÉMENT DE FIXATION, ÉLÉMENT DE MONTAGE POUR VÉHICULES ET VÉHICULE

(30) Priorität: 28.07.2017 DE 102017213039
(43) Veröffentlichungstag der Anmeldung: 21.07.2021
(62) Teilanmeldung aus: 18742760.4
(73) Patentinhaber: Adolf Würth GmbH & Co. KG, 74653 Künzelsau (DE); Würth International AG, 7000 Chur (CH)
(72) Erfinder: Hohl, Wolfgang, 74653 Amrichshausen (DE); Starke, Johannes, 74248 Ellhofen (DE)
(74) Vertreter: Patentanwälte Ruff, Wilhelm, Beier, Dauster & Partner mbB

(56) Entgegenhaltungen:
- EP-A1- 3 067 238
- WO-A1-2011/008154
- WO-A1-2014/041241
- US-A1- 2005 012 319
- US-A1- 2013 334 828
- US-B1- 6 270 137
- US-B1- 6 866 316

## Beschreibung

Die Erfindung betrifft ein Befestigungselement zum Befestigen von Einbauelementen in Fahrzeugen, insbesondere Regale oder Schränke, wobei das Befestigungselement ein erstes Befestigungsende, ein zweites Befestigungsende und einen Verbindungsabschnitt zwischen dem ersten und dem zweiten Befestigungsende aufweist. Die Erfindung betrifft auch ein Einbauelement für Fahrzeuge, insbesondere ein Regal oder einen Schrank, und ein Fahrzeug, insbesondere ein Kraftfahrzeug, mit einem Einbauelement im Innenraum oder Laderaum des Fahrzeugs.

Es ist bekannt, Regale und Schränke in Kraftfahrzeuge einzubauen. Typische Beispiele sind Kundendienstfahrzeuge oder auch Campingmobile. Solche Regale und Schränke, allgemein Einbauelemente, werden über eine starre Schraubverbindung mit dem Fahrzeug bzw. der Fahrzeugkarosserie oder dem Fahrzeugrahmen verbunden. Die Fahrzeughersteller haben das Bestreben, ein Fahrzeug so leicht wie möglich zu bauen, um Kraftstoff zu sparen. Typischerweise wird auch die Karosseriestruktur bzw. der Rahmen des Fahrzeugs leichter gebaut, beispielsweise durch Verwendung von dünneren Streben mit Verstärkungen oder durch Verwendung von neuen Materialien. Im Ergebnis führt dies dazu, dass eine mechanische Verbindung beziehungsweise Anbindung eines Regals zu dem Fahrzeugrahmen geschwächt wird, weil der Fahrzeugrahmen in der Belastungsrichtung der Verbindung nicht mehr so stabil ist. Dies führt dazu, dass beispielsweise in einem Regal nur noch geringere Lasten angeordnet werden dürfen als bei Fahrzeugen mit stabilerer Fahrzeugstruktur bzw. Rahmen, da höhere Lasten bei einem Aufprallunfall das Regal aus dem Fahrzeugrahmen bzw. der Karosseriestruktur reißen, da der Fahrzeugrahmen bzw. die Karosseriestruktur reißt. Ein Befestigungselement ist aus der WO 2014/041241 A1 bekannt.

Aufgabe der Erfindung ist es, ein Befestigungselement, ein Einbauelement für Fahrzeuge und ein Fahrzeug dahingehend zu verbessern, dass auch sehr schwere Einbauelemente bzw. Einbauelemente für hohe Lasten sicher angebunden am Fahrzeug beziehungsweise Fahrzeugrahmen werden können.

Erfindungsgemäß ist hierzu ein Befestigungselement mit den Merkmalen von Anspruch 1 vorgesehen. Es ist ein Befestigungselement zum Befestigen von Einbauelementen in Fahrzeugen, insbesondere Regale oder Schränke, vorgesehen, wobei das Befestigungselement ein erstes Befestigungsende, ein zweites Befestigungsende und einen Verbindungsabschnitt zwischen dem ersten und dem zweiten Befestigungsende aufweist, bei dem der Verbindungsabschnitt wenigstens einen Absorptionsbereich aufweist, der beim Überschreiten einer maximalen vordefinierten Haltebelastung zwischen dem ersten Befestigungsende und dem zweiten Befestigungsende nachgibt und sich verformt, wobei der Absorptionsbereich so ausgebildet ist, dass ein Verformungsweg begrenzt.

Das Vorsehen eines Absorptionsbereichs schafft die Möglichkeit, bei einem Aufprall oder nur einem starken Bremsvorgang einen Teil der kinetischen Energie durch eine kontrollierte und definierte Verformung des Absorptionsbereichs aufzunehmen. Der Absorptionsbereich ist also ein Bereich des Befestigungselements, der wenigstens zeitweise kinetische Energie des Einbauelements aufnehmen kann. Die Anbindung des Einbauelements am Fahrzeugrahmen bzw. der Karosseriestruktur wird dadurch weniger stark belastet als bei einer starren Verbindung, beispielsweise einer Schraubverbindung oder Schweißverbindung. Das Einbauelement kann durch das erfindungsgemäße Befestigungselement dadurch für höhere Lasten ausgelegt werden, als wenn das Einbauelement lediglich mit starren Schraubverbindungen mit dem Fahrzeugrahmen bzw. der Karosseriestruktur verbunden wäre. Das erfindungsgemäße Befestigungselement arbeitet somit als Absorber für kinetische Energie, der im Falle eines Unfalls kinetische Energie des Einbauelements aufnimmt, so dass wenigstens ein Teil der kinetischen Energie des Einbauelements durch das Befestigungselements absorbiert wird und das Einbauelement mit reduzierter Kraft am Fahrzeugrahmen zieht. Der Absorptionsbereich erfährt dabei immer eine Änderung seiner räumlichen Abmessungen, wobei diese Änderung reversibel oder irreversibel sein kann. Das Befestigungselement reißt oder bricht dabei nicht, so dass das Einbauelement weiter sicher am Fahrzeug gehalten ist. Der Absorptionsbereich nimmt lediglich einen Teil der Aufprallenergie bzw. kinetischen Energie des Einbauelements beim Aufprall oder bei einem starken Bremsvorgang auf und absorbiert diese wenigstens zeitweise, indem diese Energie beispielsweise in eine mechanische Verformung des Absorptionsbereichs übergeht. Der Verformungsweg ist durch eine geeignete konstruktive Ausbildung des Absorptionsbereichs begrenzt, so dass nach Erreichen des maximalen Verformungswegs die Haltekraft oder Zugkraft im Befestigungselement stark ansteigt. Der Absorptionsbereich ist so ausgebildet, dass bei einem Fahrzeugaufprall zwar möglicherweise der maximale Verformungsweg erreicht wird, das Befestigungselement aber nicht durch Brechen oder Reißen versagt. Dadurch kann ein Einbauelement im Falle eines Aufpralls des Fahrzeugs gehalten werden, da der konstruktiv vorgegebene maximale Verformungsweg begrenzt ist. Wird die Zugkraft bspw. bei einem Zugversuch nach Erreichen des maximalen Verformungswegs immer weiter erhöht, versagt das Befestigungselement irgendwann durch Brechen oder Reißen. Nach Erreichen eines maximalen vordefinierten Verformungswegs führt ein weiteres Überschreiten der maximalen Haltebelastung zum Versagen des Befestigungselements, beispielsweise durch Brechen oder Reißen. Das erfindungsgemäße Befestigungselement wird mit einem der beiden Befestigungsenden mit dem Fahrzeug und mit dem anderen der beiden Befestigungsenden mit dem Einbauelement verbunden. Der Absorptionsbereich ist dann zwischen den beiden Befestigungsenden angeordnet und kann im Falle eines Aufpralls, eines sonstigen Unfalls oder auch eines sehr starken Bremsvorgangs kinetische Energie absorbieren, indem er diese kinetische Energie beispielsweise in eine mechanische Verformung umwandelt. Im Rahmen der Erfindung kann das Befestigungselement mehr als zwei Befestigungsenden aufweisen, wobei immer der Verbindungsabschnitt zwischen wenigstens zwei Befestigungsenden angeordnet ist, so dass kinetische Energie durch den Absorptionsbereich oder die mehreren Absorptionsbereiche aufgenommen werden kann. Beispielsweise kann im Rahmen der Erfindung der Verbindungsabschnitt auch dafür ausgelegt sein, sich in mehreren Richtungen mechanisch zu verformen. Dadurch kann nicht nur kinetische Energie in und entgegen der Fahrzeuglängsrichtung aufgenommen werden, sondern beispielsweise auch kinetische Energie in Fahrzeughochrichtung oder -querrichtung, beispielsweise wenn das Fahrzeug zu schnell über eine starke Bodenwelle fährt oder einen seitlichen Aufprall erfährt.

Gemäß der Erfindung verformt sich der Absorptionsbereich beim Überschreiten der maximalen Haltebelastung wenigstens abschnittsweise plastisch.

Mittels einer plastischen Verformung, beispielsweise eines Metallstreifens oder eines Gurts, kann eine maximale vordefinierte Haltebelastung und ein maximaler vordefinierter Verformungsweg exakt eingestellt werden. Nachdem das Befestigungselement plastisch verformt ist, muss dieses ausgetauscht oder zurückverformt werden, um den Ausgangszustand wiederherzustellen.

Gemäß der Erfindung weist der Absorptionsbereich einen gebogenen Blechstreifen auf, wobei ein verformter gestreckter Zustand des Blechstreifens eine Begrenzung des Verformungswegs definiert.

Eine plastische Verformung des Absorptionsbereichs wird in diesem Fall durch die Streckung des Blechstreifens ausgehend von seinem ursprünglichen, gebogenen Zustand realisiert. Bspw. kann der Blechstreifen so bemessen sein, dass die Streckung des Blechstreifens ausgehend von seinem gebogenen Zustand eine erste Haltekraft über einen Verformungsweg bereitstellt, wobei der Verformungsweg durch die Begrenzung des Verformungswegs auf den maximal vordefinierten Verformungsweg gegeben ist. Ist der gebogene Blechstreifen dann gestreckt, steigt die Haltekraft stark an und es findet keine plastische Verformung des Absorptionsbereichs mehr statt. Das Einbauelement kann dadurch sicher im Fahrzeug gehalten werden. Erst dann, wenn ausgehend vom bereits gestreckten Zustand in einem Zugversuch die Zugkraft immer weiter erhöht wird, wird der Blechstreifen sich weiter dehnen, einschnüren und dann letztendlich reißen. Mittels eines gebogenen Blechstreifens kann erfindungsgemäß somit ein definierter Verformungsweg bereitgestellt und auch durch den gestreckten Zustand des Blechstreifens auf einen maximal vordefinierten Verformungsweg begrenzt werden. Die Biegung des Blechstreifens erfolgt vorteilhafterweise so, dass die Biegung um eine oder mehrere parallel zur Oberseite und Unterseite des Blechstreifens liegende Biegeachsen erfolgt, wobei die Oberseite und Unterseite flächenmäßig größer sind als die Seitenflächen des Blechstreifens.

Gemäß der Erfindung ist das Befestigungselement als Blechstreifen ausgebildet.

Mittels eines Blechstreifens kann zum einen ein sehr kostengünstiges Befestigungselement auch in großen Stückzahlen hergestellt werden und zum anderen kann durch geeignete Gestaltung des Blechstreifens im Absorptionsbereich eine vordefinierte Haltebelastung und ein maximaler, vordefinierter Verformungsweg präzise eingestellt werden.

Gemäß der Erfindung ist der Verbindungsabschnitt im Absorptionsbereich mehrfach gebogen.

Jede Biegung des Verbindungsabschnitts kann sich beim Einleiten einer Haltebelastung, die die maximal vordefinierte Haltebelastung überschreitet, kontrolliert verformen. Die Biegungen können dabei in unterschiedlichen Richtungen erfolgen, um kontrollierte Verformungen beim Einleiten von Belastungen in unterschiedlichen Richtungen zu ermöglichen.

Gemäß der Erfindung ist der Verbindungsabschnitt im Absorptionsbereich wellenartig gebogen.

Auf diese Weise können eine kontrollierte Verformung und ein kontrollierter, vordefinierter Verformungsweg erreicht werden.

Das der Erfindung zugrunde liegende Problem wird auch durch ein Einbauelement für Fahrzeuge mit den Merkmalen von Anspruch 2 gelöst. Es ist ein Einbauelement für Fahrzeuge vorgesehen, insbesondere ein Regal oder ein Schrank, bei dem wenigstens ein erfindungsgemäßes Befestigungselement vorgesehen ist, um das Einbauelement mit einem Rahmen und/oder einer Tragstruktur des Fahrzeugs zu verbinden.

Das der Erfindung zugrunde liegende Problem wird auch durch ein Fahrzeug mit den Merkmalen von Anspruch 3 gelöst. Es ist ein Fahrzeug vorgesehen, insbesondere ein Kraftfahrzeug, mit einem Einbauelement im Innenraum oder Laderaum des Fahrzeugs, bei dem das Einbauelement mittels wenigstens eines erfindungsgemäßen Befestigungselements mit einem Rahmen und/oder einer Tragstruktur des Fahrzeugs verbunden ist.

Weitere Merkmale und Vorteile der Erfindung ergeben sich aus den Ansprüchen und der folgenden Beschreibung bevorzugter Ausführungsformen der Erfindung im Zusammenhang mit den Zeichnungen. Einzelmerkmale der unterschiedlichen, in den Zeichnungen dargestellten und der Beschreibung beschriebenen Ausführungsformen können dabei in beliebiger Weise miteinander kombiniert werden, auch ohne die weiteren Merkmale, mit denen sie im Zusammenhang gezeigt oder beschrieben sind, ohne den Rahmen der Erfindung zu überschreiten. In den Zeichnungen zeigen:
- Fig. 1a: eine schematische Darstellung einer Einbausituation eines Einbauelements in ein Fahrzeug,
- Fig. 1b: eine schematische Darstellung einer Einbausituation eines Einbauelements nach dem Stand der Technik,
- Fig. 2: eine vergrößerte und isolierte Darstellung eines nicht erfindungsgemäßen Befestigungselements der Fig. 1a von schräg oben,
- Fig. 3: das Befestigungselement der Fig. 2 in einer Seitenansicht,
- Fig. 4: eine Schnittansicht des Befestigungselements der Fig. 2,
- Fig. 5: eine Ansicht des Befestigungselements der Fig. 2 von schräg hinten,
- Fig. 6: eine vergrößerte und isolierte Darstellung eines der Befestigungselemente der Fig. 1a von schräg oben,
- Fig. 7: das Befestigungselement der Fig. 6 in einer Seitenansicht,
- Fig. 8: das Befestigungselement der Fig. 6 in einer Vorderansicht,
- Fig. 9: eine vergrößerte und isolierte Darstellung eines der Befestigungselemente der Fig. 1a von schräg oben,
- Fig. 10: eine Seitenansicht des Befestigungselements der Fig. 9,
- Fig. 11: eine Vorderansicht des Befestigungselements der Fig. 9,
- Fig. 12: eine abschnittsweise Darstellung eines erfindungsgemäßen Einbauelements gemäß einer weiteren Ausführungsform von schräg oben,
- Fig. 13: das Einbauelement der Fig. 12 aus einer anderen Perspektive,
- Fig. 14: das Einbauelement der Fig. 12 von schräg hinten,
- Fig. 15: eine vergrößerte Darstellung einer Einzelheit aus Fig. 13,
- Fig. 16: eine vergrößerte Einzelheit aus Fig. 14 und
- Fig. 17: eine weitere vergrößerte Einzelheit aus Fig. 13.

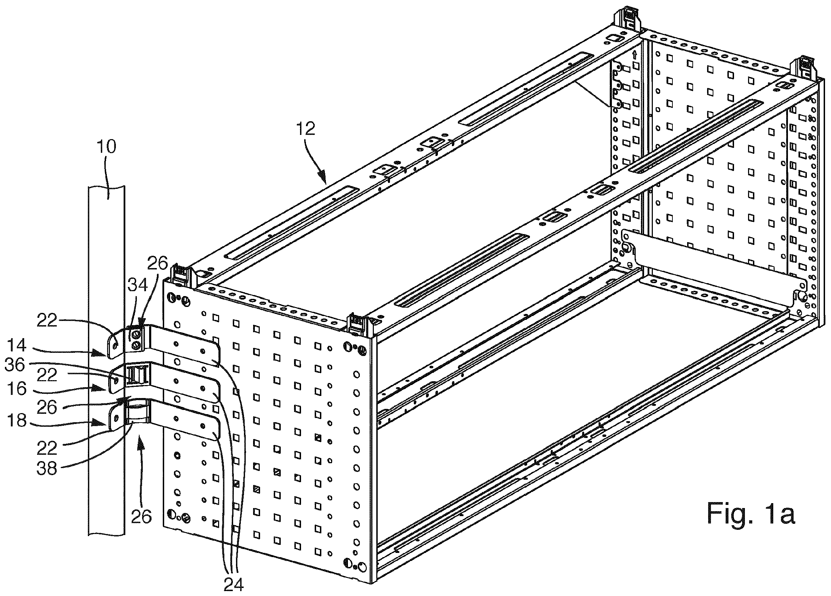

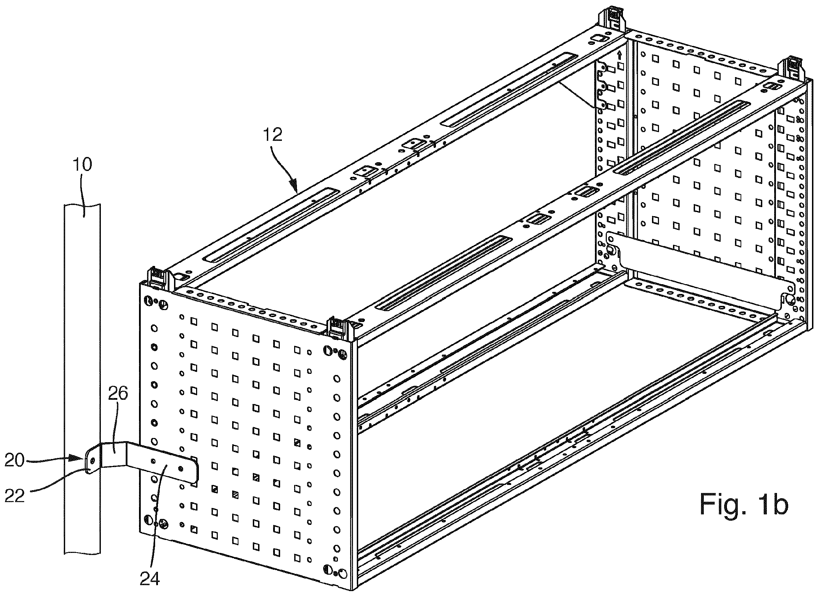

Fig. 1 zeigt schematisch einen Abschnitt einer Karosseriestruktur 10 eines im Übrigen nicht dargestellten Fahrzeugs sowie ein Einbauelement 12 in Form eines Regals. Das Fahrzeug mit der Karosseriestruktur 10 ist beispielsweise als Kastenwagen ausgebildet und das Regal 12 ist in den Laderaum des Fahrzeugs eingebaut, um dann beispielsweise Aufbewahrungskästen für Kleinteile, insbesondere Schrauben, oder auch Werkzeugkisten und dergleichen aufzunehmen. Das Einbauelement 12 ist mit der Karosseriestruktur 10 mittels drei Befestigungselementen 14, 16 und 18 verbunden. Die Anordnung der Befestigungselemente 14, 16 und 18 ist dabei lediglich beispielhaft und dient der Verdeutlichung der unterschiedlichen Gestaltung der Befestigungselemente 14, 16 und 18. In der Praxis würde beispielsweise lediglich das Befestigungselement 14 zur Verbindung von Karosseriestruktur 10 und Einbauelement 12 an der dargestellten Stelle verwendet werden und ein weiteres, gleichartiges Befestigungselement 14 würde dann unterhalb des Befestigungselements 28 angeordnet, wohingegen die Befestigungselemente 16, 18 in der Praxis dann nicht verwendet würden. Anstelle des Befestigungselements 14 oder mehrerer Befestigungselemente 14 könnten dann selbstverständlich auch eines oder mehrere der Befestigungselemente 16 oder 18 verwendet werden.

Fig. 1b zeigt die Situation der Fig. 1a, wobei ein Befestigungselement 20 dargestellt ist. Das Befestigungselement 20 ist nicht erfindungsgemäß ausgebildet und lediglich zur Verdeutlichung eines Vergleichs dargestellt. Das Befestigungselement 20 weist ein erstes Befestigungsende 22 auf, mit dem das Befestigungselement 20 mit der Karosseriestruktur 10 verbunden ist. Die Verbindung erfolgt beispielsweise über eine Blechschraube. Das Befestigungselement 22 weist ein zweites Befestigungsende 24 auf, das mit zwei Durchgangsöffnungen versehen ist und das an dem Einbauelement 12 befestigt ist, beispielsweise mittels zweier Schraubbolzen. Die beiden Befestigungsenden 22, 24 sind mittels eines Verbindungsabschnitts 26 miteinander verbunden. Der Verbindungsabschnitt 26 ist als ebener Abschnitt eines Blechstreifens ausgebildet, wobei der Blechstreifen eingangs und ausgangs des Verbindungsabschnitts 26 um jeweils 45° abgewinkelt ist, so dass die beiden Befestigungsenden 22, 24 im rechten Winkel zueinander angeordnet sind. Der Verbindungsabschnitt 26 kann sich, da er als Abschnitt eines Blechstreifens ausgebildet ist, zwar verformen, eine solche Verformung erfolgt aber undefiniert und nur in sehr geringem Maß. Wird der Verbindungsabschnitt 26 zu stark belastet, wird er sich erst im geringem Maß dehnen und dann unmittelbar reißen. Wenn beispielsweise das Fahrzeug in einen Unfall verwickelt ist und beispielsweise auf eine Wand aufprallt, so wird die Karosseriestruktur 10 abgestoppt, das Einbauelement 12 hat aber ebenfalls eine große kinetische Energie und versucht daher, sich weiter in Fahrtrichtung, in Fig. 1 also beispielsweise nach rechts oben, weiterzubewegen. Das Verbindungselement 20 verhindert eine solche Bewegung des Einbauelements 12 und wird dadurch in einer Richtung nach rechts oben in Fig. 1 stark belastet. Zwischen den Befestigungsenden 22, 24 wirkt dadurch eine sehr große Haltebelastung. Ist das Befestigungselement 20 stabil genug ausgelegt, so wird diese Haltebelastung ohne Verformung des Befestigungselements 20 auf die Karosseriestruktur 10 und speziell eine Verbindung zwischen dem Befestigungselement 20 und der Karosseriestruktur 10 übertragen. Da moderne Fahrzeuge eine möglichst leicht ausgelegte Karosseriestruktur 10 haben, ist zu befürchten, dass entweder die Karosseriestruktur 10 reißt oder eine Befestigung des Befestigungselements 20 an der Karosseriestruktur 10 ausreißt.

Ist die Karosseriestruktur 10 stabil genug ausgelegt und auch die Verbindung zwischen dem Befestigungsende 22 und der Karosseriestruktur 10, beispielsweise eine Blechschraube, stabil genug ausgelegt, wird vor einer nennenswerten Verformung des Verbindungsabschnitts 26 dieser reißen, so dass das Einbauelement 12 sich von der Karosseriestruktur 10 löst.

Sowohl das Reißen der Karosseriestruktur 10, das Ausreißen des Befestigungselements 20 aus der Karosseriestruktur 10 als auch das Reißen des Verbindungsabschnitts 26 kann zu lebensgefährlichen Situationen für die Insassen des Fahrzeugs führen.

Die Befestigungselemente 14, 16 und 18 weisen neben den beiden Befestigungsenden 22, 24 jeweils einen Absorptionsbereich 34, 36 bzw. 38 auf. Dieser Absorptionsbereich absorbiert beim Überschreiten einer maximal vordefinierten Haltebelastung kinetische Energie des Einbauelements und definiert gleichzeitig einen maximalen Verformungsweg. Nach Erreichen des maximalen Verformungswegs kommt es bis zum Versagen des Befestigungselements, beispielsweise durch Brechen oder Reißen, zu keiner definierten Verformung des Befestigungselements mehr, vielmehr wird sich das gesamte Befestigungselement noch in geringem Maß dehnen und dann unmittelbar reißen. Bei den Befestigungselementen 14, 16, 18 verformt sich der Absorptionsbereich 34, 36, 38 beim Aufnehmen der kinetischen Energie plastisch.

Bei dem geschilderten Belastungsfall, nämlich einem Aufprall des Fahrzeugs, wird dadurch die kinetische Energie des Einbauelements 12 unverändert in eine in Fig. 1 beispielsweise nach oben rechts gerichtete Haltekraft umgesetzt, die dann über die zweiten Befestigungsenden 24 jeweils in die Absorptionsbereiche 34, 36, 38 eingeleitet wird. Die Absorptionsbereiche 34, 36, 38 werden sich dann kontrolliert plastisch verformen und dadurch einen Teil der kinetischen Energie des Einbauelements 12 durch die plastische Verformung absorbieren. Die im Falle des Aufpralls über das erste Befestigungsende 22 auf die Karosseriestruktur 10 wirkende Haltebelastung ist dadurch wesentlich geringer als bei dem Befestigungselement 20 gemäß Fig. 1b ohne einen Verformungsabschnitt 34, 36, 38. Selbst wenn die Karosseriestruktur 10 also vergleichsweise leicht und wenig belastbar ausgebildet ist, kann dennoch das Einbauelement 12 auch mit schweren Gegenständen beladen werden, ohne dass eine maximal zulässige Haltebelastung im Bereich der Verbindung der Befestigungselemente 14, 16, 18 mit der Karosseriestruktur 10 überschritten wird.

Wie eingangs bereits ausgeführt wurde, dient Fig. 1a lediglich zur Verdeutlichung und ist als schematische Darstellung zu verstehen. Üblicherweise werden zur Verbindung des Einbauelements 12 mit der Karosseriestruktur 10 lediglich gleichartige Verbindungselemente 14, 16, 18 verwendet, wobei dann beispielsweise zwei Verbindungselemente 14 eingesetzt werden, eines in der dargestellten Position und eines am unteren Ende des Einbauelements 12. Weitere, gleichartige Verbindungselemente können dann beispielsweise an der in Fig. 1a rechten Seite des Einbauelements 12 eingesetzt werden, um auch dort das Einbauelement 12 mit der Karosseriestruktur 10 zu verbinden.

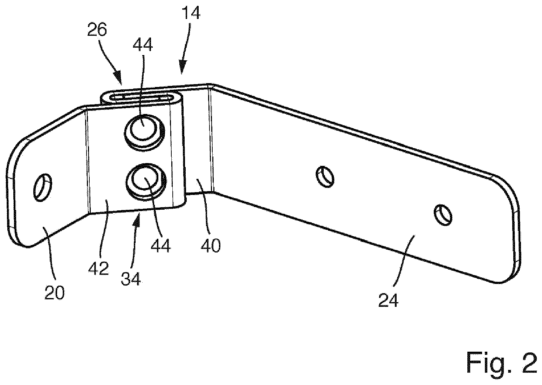

Die Darstellung der Fig. 2 zeigt das nicht erfindungsgemäße Befestigungselement 14 der Fig. 1a in vergrößerter und isolierter Darstellung. Der zwischen den Befestigungsenden 20, 24 angeordnete Verbindungsabschnitt 26 definiert den Absorptionsbereich 34. Der Verbindungsabschnitt 26 besteht aus zwei hakenförmigen Blechstreifenabschnitten 40, 42, die ineinander eingehängt und mittels zweier Nieten 44 miteinander verbunden sind. Dabei verbinden die beiden Nieten 44 lediglich die beiden freien Schenkel der hakenförmigen Abschnitte 40, 42. Die jeweils mit einem der Befestigungsenden 20, 24 verbundenen Schenkel sind durch die Nieten 44 nicht miteinander verbunden. Diese Schenkel weisen Durchgangsöffnungen auf, durch die die Nieten 44 sichtbar sind und die es auch ermöglichen, die Nieten 44 im eingehakten Zustand der beiden Blechstreifenabschnitte 40, 42 zu setzen.

Tritt zwischen den beiden Befestigungsenden 20, 24 eine Belastung auf, die eine vordefinierte Haltebelastung überschreitet, wird sich der Absorptionsbereich 34 plastisch dadurch verformen, dass die beiden hakenförmigen Blechstreifenabschnitte 40, 42 aufgebogen werden und dadurch ihre in Fig. 2 dargestellte, jeweils U-artige Form verlieren. Die beiden Befestigungsabschnitte 20, 24 werden sich durch diese plastische Verformung des Absorptionsbereichs 34 dadurch voneinander wegbewegen. Während dieser Bewegung, die selbstverständlich durch eine Bewegung des Einbauelements 12 relativ zur Karosseriestruktur 10 verursacht ist, wird im Absorptionsbereich 34 kinetische Energie des Einbauelements 12 absorbiert.

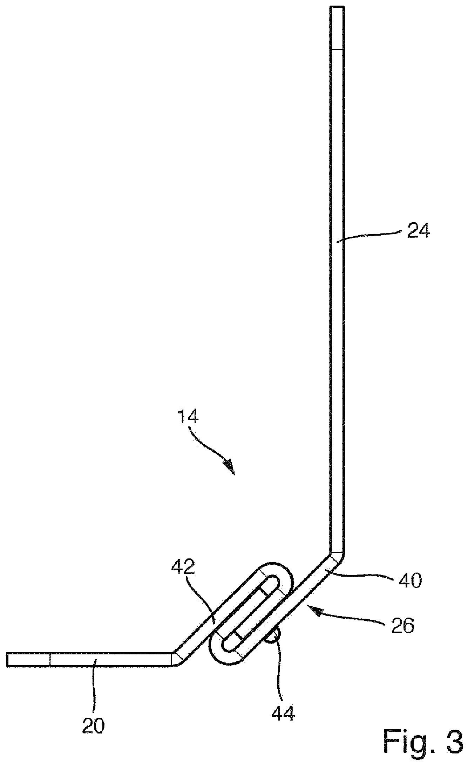

Fig. 3 zeigt eine Seitenansicht des Verbindungselements 14. In dieser Ansicht ist gut zu erkennen, dass die beiden Blechstreifenabschnitte 42, 44 jeweils hakenförmig ausgebildet sind bzw. ein hakenförmiges Ende aufweisen und mit diesem hakenförmigen Ende ineinander eingehängt sind.

Der Verbindungsabschnitt 26 ist so ausgebildet und angeordnet, dass die beiden Befestigungsenden 20, 24 senkrecht zueinander angeordnet sind.

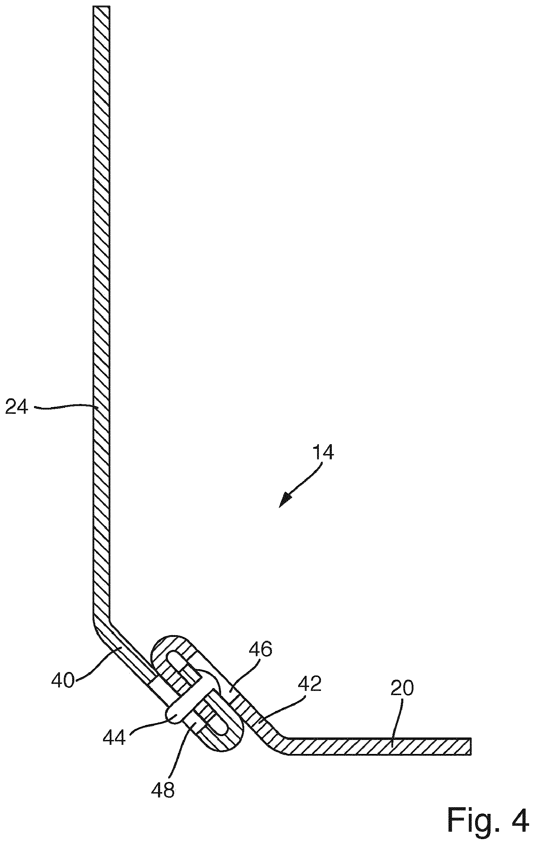

Fig. 4 zeigt eine Schnittansicht des Befestigungselements 14 der Fig. 3, wobei die Schnittebene durch einen der Nieten 44 läuft. In dieser Ansicht ist eine der Ausnehmungen 46 im Blechstreifenabschnitt 42 gut zu erkennen, in der der Kopf des Niets 44 angeordnet wird. In dem Blechstreifenabschnitt 44 ist eine von zwei Ausnehmungen 48 zu erkennen, in dem das dem Kopf des Niets 44 gegenüberliegende Ende angeordnet wird. Wie bereits ausgeführt wurde, dienen die Ausnehmungen 46, 48 auch dazu, den Niet 44 zu setzen und dadurch die Blechstreifenabschnitte 42, 44 miteinander zu verbinden.

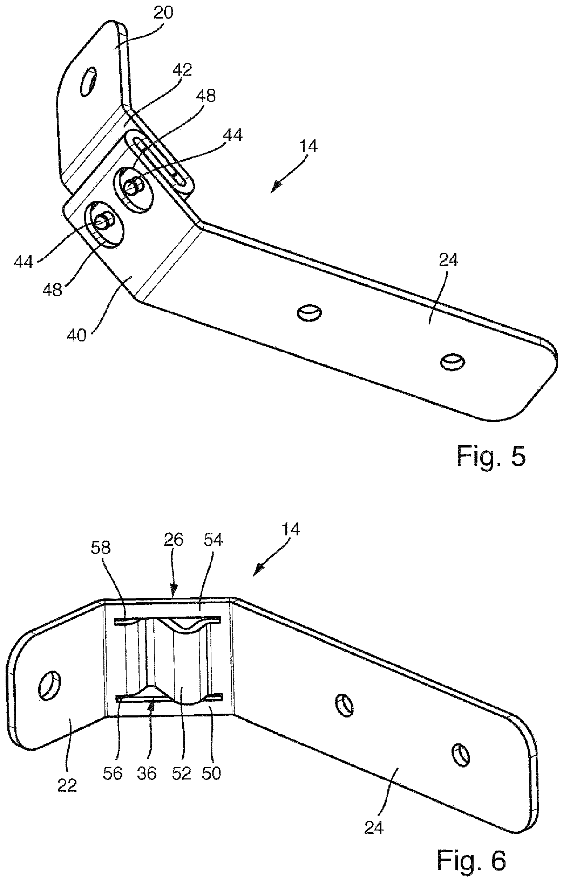

Die Darstellung der Fig. 5 zeigt das Befestigungselement 14 der Fig. 2 in einer Ansicht von schräg hinten. In dieser Ansicht sind die beiden Ausnehmungen 48 in dem Blechstreifenabschnitt 40 zu erkennen. Durch die Ausnehmungen hindurch sind die Nieten 44 und auch der freie Schenkel des Blechstreifenabschnitts 42 zu erkennen.

Die Darstellung der Fig. 6 zeigt das Befestigungselement 16 der Fig. 1a in isolierter Darstellung von schräg oben. Das Befestigungselement 16 ist aus einem Blechstreifen gebildet und die beiden Befestigungsenden 22, 24 sind identisch wie bei dem Befestigungselement 14 ausgebildet und werden daher nicht erneut erläutert. Der Verbindungsabschnitt 26 besteht ebenfalls aus einem Abschnitt des Blechstreifens, ist aber mit einem anderen Absorptionsbereich 36 versehen. Im Absorptionsbereich 36 sind drei nebeneinander angeordnete Blechstreifen 50, 52 und 54 vorgesehen. Die beiden Blechstreifenabschnitte 50, 54 bilden dabei das in Fig. 6 obere bzw. untere Ende des Verbindungsabschnitts 26 und sind eben ausgebildet. Zwischen den beiden Blechstreifenabschnitten 50, 54 ist der Blechstreifenabschnitt 52 angeordnet, der wesentlich breiter ist als die Blechstreifenabschnitte 54. Bei der in Fig. 6 dargestellten Ausführungsform des Verbindungselements 16 ist der Blechstreifenabschnitt 52 etwa viermal so breit wie die Blechstreifenabschnitte 50, 54. Der Blechstreifenabschnitt 52 ist auch wellenförmig ausgebildet und dabei in Form einer vollständigen Welle gestaltet, also mit einem Wellenberg und einem darauffolgenden Wellental. Der Blechstreifenabschnitt 52 ist von dem Blechstreifenabschnitt 50 durch einen Schlitz getrennt, wie auch der Blechstreifenabschnitt 54 vom Blechstreifenabschnitt 52 durch einen Schlitz 58 getrennt ist. Der Absorptionsbereich 36 kann beispielsweise dadurch hergestellt werden, dass der Verbindungsabschnitt 26 in eine Presse eingelegt wird, die dann den mittleren Blechstreifenabschnitt 52 zu der dargestellten Wellenform verformt und gleichzeitig die beiden Schlitze 56, 58 ausstanzt. Durch die Verformung ist dann eine Materialdicke im mittleren Blechstreifenabschnitt 52 etwas geringer als in den Blechstreifenabschnitten 50, 54.

Der Absorptionsbereich 36 wird sich beim Überschreiten einer maximalen Haltebelastung zwischen den beiden Befestigungsenden 22, 24 plastisch verformen. Dies geschieht dadurch, dass die beiden schmäleren Blechstreifenabschnitte 50, 54 in die Länge gezogen werden oder sogar reißen. Der mittlere Blechstreifenabschnitt 52 wird sich hingegen dadurch plastisch verformen, dass er seine Wellenform verliert und gestreckt wird. Ein maximaler Verformungsweg ist dann erreicht, wenn der mittlere Blechstreifenabschnitt 52 wieder annähernd eben ist. Eine weitere Verformung des Befestigungselements 16 kann dann nicht mehr erfolgen. Eine weitere Verformung wird erst dann erfolgen, wenn die Belastung so groß ist, dass dann auch der mittlere Blechstreifenabschnitt 52 reißt. Das Befestigungselement 16 wird aber so ausgelegt, dass auch bei hohen Aufprallgeschwindigkeiten der mittlere Blechstreifenabschnitt 52 nicht reißt, sondern sich lediglich plastisch verformt und nach Erreichen einer annähernd ebenen Verformungsposition des mittleren Blechstreifenabschnitts 52 das Einbauelement 12 dann sicher an der Karosseriestruktur 10 hält.

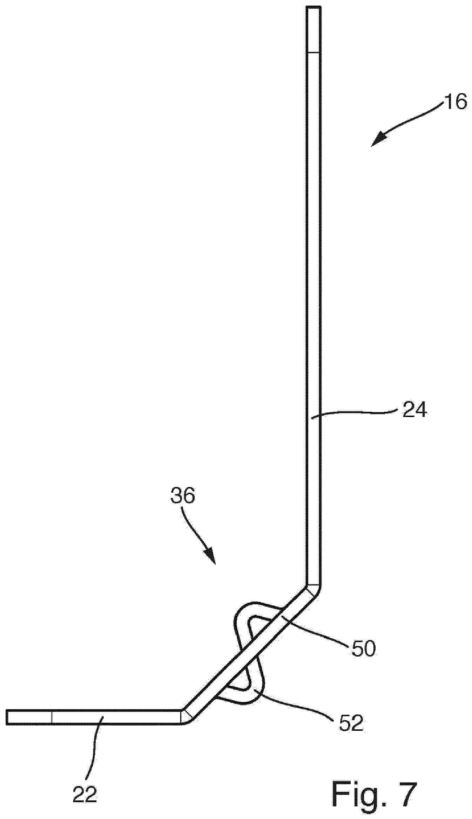

Die Darstellung der Fig. 7 zeigt eine Seitenansicht des Befestigungselements 16 der Fig. 6. In dieser Ansicht ist die Wellenform des mittleren Blechstreifenabschnitts 52, das den Absorptionsbereich 26 bildet, gut zu erkennen.

Auch bei dem Befestigungselement 16 sind die Befestigungsenden 22, 24 im rechten Winkel zueinander angeordnet.

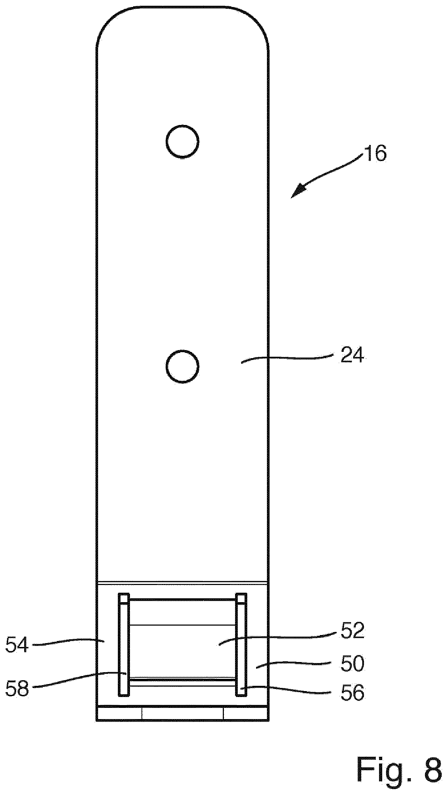

Fig. 8 zeigt das Befestigungselement 16 der Fig. 6 in einer Vorderansicht. Der Blechstreifenabschnitt 50 liegt in der Darstellung der Fig. 8 auf der rechten Seite des

Verbindungselements 16 und ist durch den Schlitz 56 vom mittleren Blechstreifenabschnitt 52 getrennt. Der Blechstreifenabschnitt 54 liegt in der Darstellung der Fig. 8 auf der rechten Seite des Verbindungselements 16 und ist durch den Schlitz 58 vom mittleren Blechstreifenabschnitt 52 getrennt.

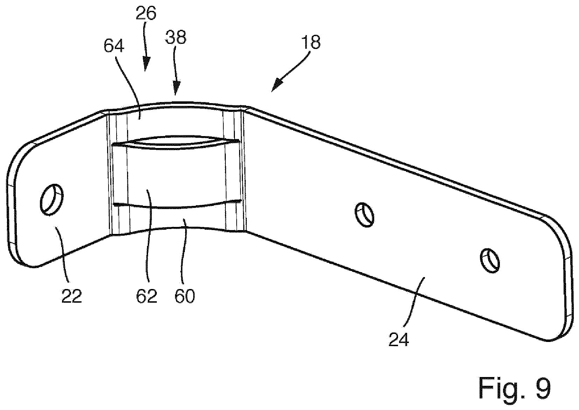

Die Darstellung der Fig. 9 zeigt eine isolierte Darstellung des Verbindungselements 18 der Fig. 1a von schräg oben. Die beiden Befestigungsenden 22, 24 des Befestigungselements 18 sind identisch ausgebildet wie bei den bereits beschriebenen Befestigungselementen 14, 16 und werden daher nicht erneut erläutert. Der Verbindungsabschnitt 26 weist den Absorptionsbereich 38 auf, der aus drei nebeneinander angeordneten Blechstreifen 60, 62 und 64 besteht. In Fig. 9 bildet der Blechstreifenabschnitt 60 eine Unterkante des Verbindungsabschnitts 26 und der Blechstreifenabschnitt 64 eine Oberkante des Verbindungsabschnitts 26. Der mittlere Blechstreifenabschnitt 62 ist zwischen den beiden Blechstreifenabschnitten 60, 64 angeordnet. Der mittlere Blechstreifenabschnitt 62 ist etwa doppelt so breit wie die äußeren Blechstreifenabschnitte 60, 64. Der mittlere Blechstreifenabschnitt 62 ist in Fig. 9 in Richtung des Betrachters gekrümmt, wohingegen die beiden Blechstreifenabschnitte 60, 64 vom Betrachter weg gekrümmt sind.

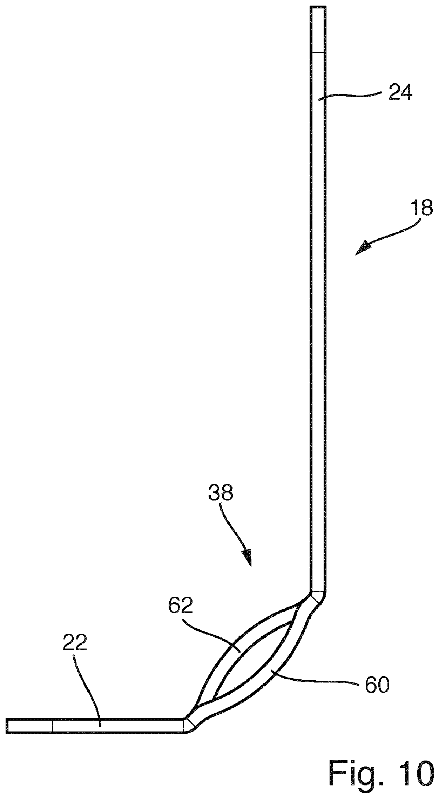

Fig. 10 zeigt eine Seitenansicht des Verbindungselements 18 der Fig. 9 und in dieser Ansicht ist die entgegengesetzte Krümmung der Blechstreifenabschnitte 62 und 60 gut zu erkennen. Wird zwischen den beiden Befestigungsenden 24, 22 des Befestigungselements 18 eine vordefinierte maximale Haltebelastung überschritten, so wird sich der Absorptionsbereich 38 dadurch plastisch verformen, dass die Blechstreifenabschnitte 60, 62, 64 geradegezogen werden. Durch die gegensinnige Krümmung der Blechstreifenabschnitte 60, 64 einerseits und des Blechstreifenabschnitts 62 andererseits bewegen sich die Blechstreifenabschnitte 60, 62, 64 dadurch in der Seitenansicht der Fig. 10 aufeinander zu. Durch die dadurch erfolgende plastische Verformung kann bei einem Aufprall kinetische Energie des Einbauelements 12 absorbiert werden. Der maximale Verformungsweg ist dann erreicht, wenn die Blechstreifenabschnitte 60, 62, 64 gestreckt sind. Eine weitere plastische Verformung erfolgt dann nicht mehr. Lediglich bei einer noch weit höheren Belastung, die aber bei einem Aufprall eines Fahrzeugs nicht erreicht wird, wird dann das Befestigungselement 18 durch Brechen oder Reißen versagen. Das Befestigungselement 18 ist so ausgebildet, dass die beiden Befestigungsenden 22, 24 im rechten Winkel zueinander angeordnet sind. Das Befestigungselement 18 kann aus einem einstückigen Blechstreifen hergestellt werden. Zur Herstellung des Verformungsabschnitts 38 kann der Blechstreifen gepresst und gleichzeitig gestanzt werden, so dass die drei Blechstreifenabschnitte 60, 62, 64 mit der beschriebenen gegensinnigen Krümmung entstehen.

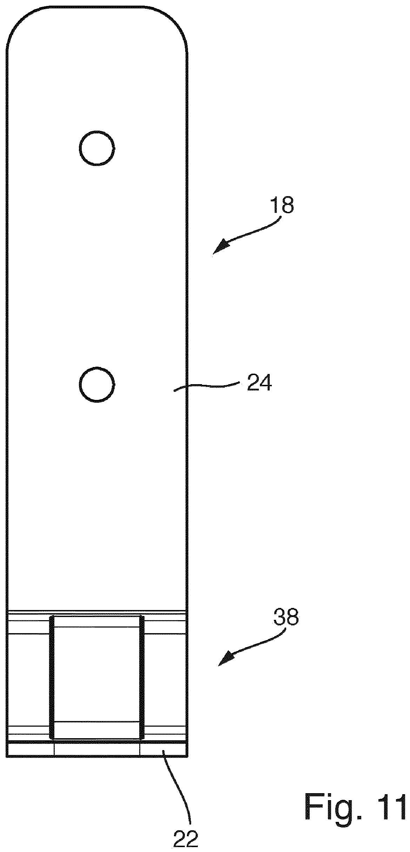

Fig. 11 zeigt das Befestigungselement 18 in einer Ansicht von vorne.

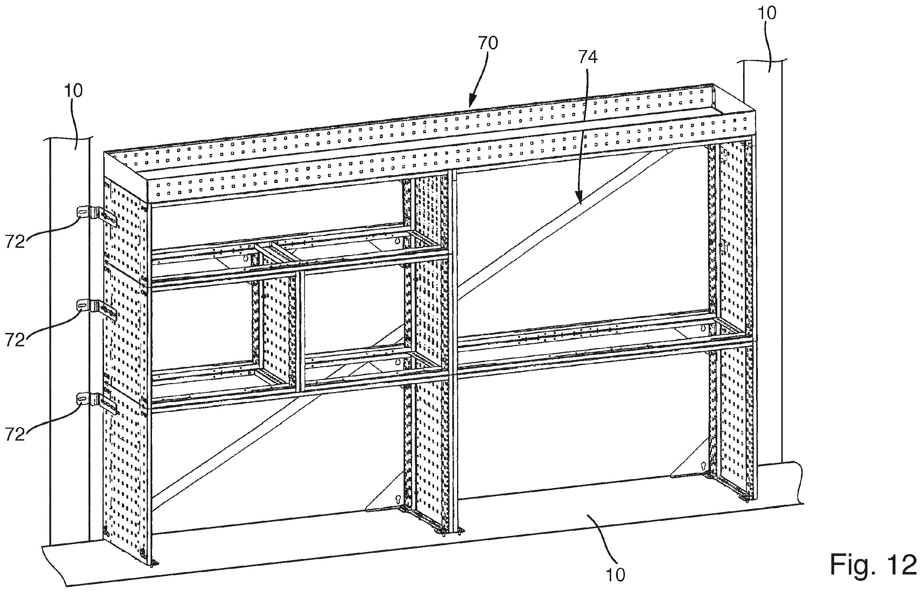

Die Darstellung der Fig. 12 zeigt ein erfindungsgemäßes Einbauelement 70 gemäß einer weiteren Ausführungsform der Erfindung. Das Einbauelement 70 ist als Regal ausgebildet und, wie in Fig. 12 schematisch dargestellt ist, mit einer Karosseriestruktur 10 eines im Übrigen nicht dargestellten Kraftfahrzeugs verbunden. Zur Verbindung des Einbauelements 70 mit der Karosseriestruktur 10 dienen einerseits drei erfindungsgemäße Befestigungselemente 72. Darüber hinaus ist ein weiteres nicht erfindungsgemäßes Befestigungselement 74 vorgesehen, das sich von einer in Fig. 12 unteren linken Ecke des Einbauelements 70 bis in eine obere rechte Ecke des Einbauelements 70 erstreckt.

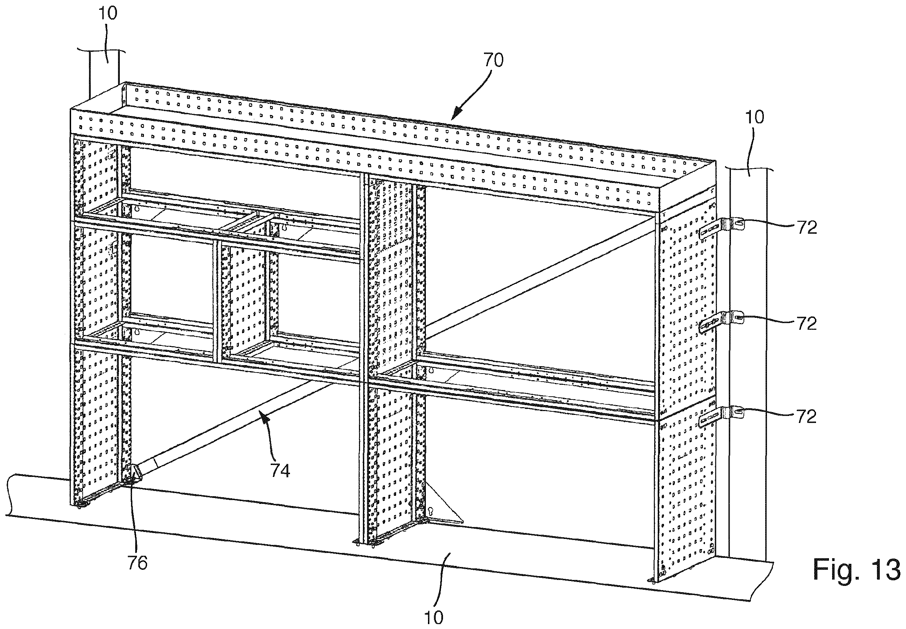

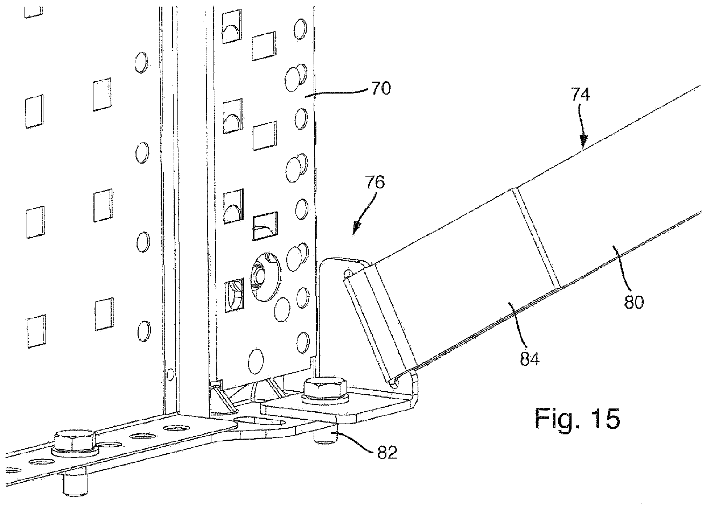

Fig. 13 zeigt eine Ansicht des Einbauelements 70 der Fig. 12 aus einem anderen Blickwinkel. Aus dem Blickwinkel der Fig. 13 ist zu erkennen, dass auch an dem in Fig. 12 und Fig. 13 rechten Ende des Einbauelements 70 drei erfindungsgemäße Befestigungselemente 72 vorgesehen sind, um das Einbauelement mit der Karosseriestruktur 10 zu verbinden. In der Ansicht der Fig. 13 ist auch ein erstes Befestigungsende 76 des Befestigungselements 74 genauer zu erkennen. Mit dem Befestigungsende 76 wird das Befestigungselement 74 einerseits mit der Karosseriestruktur 10 und andererseits mit dem linken Ende des Einbauelements 70 verbunden, siehe auch Fig. 15.

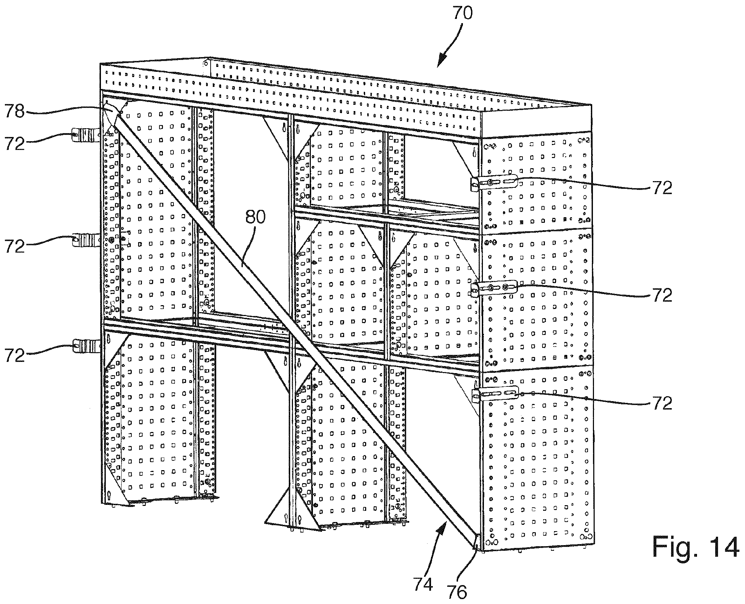

Die Darstellung der Fig. 14 zeigt das Einbauelement 70 der Fig. 12 und 13 in einer Ansicht von hinten. Die Karosseriestruktur 10 ist in dieser Ansicht nicht dargestellt, um die Übersichtlichkeit zu verbessern. Zu erkennen sind die sechs erfindungsgemäßen Befestigungselemente 72 sowie ein Befestigungsende 78 des Befestigungselements 74, das dem Befestigungsende 76 gegenüberliegt. Das Befestigungsende 78 ist mit dem Einbauelement 70 verbunden. Wie in Fig. 14 zu erkennen ist, verbindet das Befestigungselement 14 die in Fig. 14 rechts unten liegende Ecke des Einbauelements 70 mit der links oben liegenden Ecke des Einbauelements 70 und verläuft somit diagonal und parallel zu einer Rückseite des Einbauelements 70.

Die beiden Befestigungsenden 76, 78 sind über einen textilen Gurt 80 miteinander verbunden, der einen Verbindungsabschnitt des Befestigungselements 74 bildet. Der Gurt 80 ist dabei so ausgebildet, dass er sich beim Überschreiten einer maximalen Haltebelastung plastisch verformen und dadurch kinetische Energie bei einem Aufprall eines Fahrzeugs absorbieren kann. Der Gurt 80 ist also nach Art eines Bergsteiger- oder Kletterseils ausgebildet, das sich bei hoher Zugbelastung irreversibel längt und dadurch kinetische Energie absorbiert. Bei einem Fahrzeugaufprall in Fahrtrichtung, in Fig. 14 von rechts nach links, strebt das Einbauelement 70 während des Aufpralls noch in Fahrtrichtung weiter, so dass sich auch die obere linke Ecke des Einbauelements 70 gegenüber der unteren rechten Ecke und der unteren linken Ecke des Einbauelements 70 nach vorne, in Fig. 14 also nach links bewegen wird. Eine solche Bewegung wird in einem gewissen Maß durch die erfindungsgemäßen Befestigungselemente 72 ermöglicht. Der Gurt 80 erlaubt eine gewisse Bewegung des Einbauelements 70 in der beschriebenen Art und Weise, indem er sich plastisch verformt und dadurch länger wird. Bei dieser plastischen Verformung absorbiert der Gurt 80 dadurch kinetische Energie des Einbauelements 70. Die Verbindung des Befestigungselements 74 am Befestigungsende 76 mit der Karosseriestruktur wird dadurch weniger stark belastet als bei einer starren Ausführung des Gurts 80. Der Gurt 80 kann aber auch so ausgebildet sein, dass er sich lediglich elastisch verformt und dann in seine Ausgangslage zurückfedert.

Fig. 15 zeigt das Befestigungsende 76 des Befestigungselements 74 aus Fig. 13 in vergrößerter Darstellung. Das Befestigungsende 76 besteht aus einem Blechwinkel, der einen Schlitz zum Durchfädeln des Gurts 80 aufweist. Das Befestigungsende 76 ist somit einerseits mit dem Gurt 80 und andererseits über einen Schraubbolzen 82 sowohl mit dem Einbauelement 70 als auch der in Fig. 15 nicht dargestellten Karosseriestruktur verbunden, beispielsweise dem Fahrzeugboden, siehe auch Fig. 13. Der Gurt 80 ist durch den Schlitz im Befestigungsende 76 hindurchgefädelt und in einem Bereich 84 zu einer Schlaufe verbunden, beispielsweise vernäht.

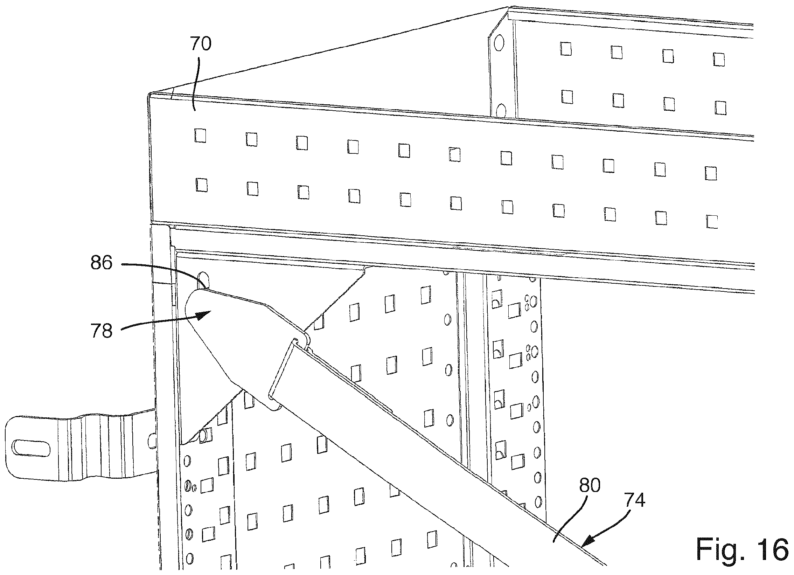

Fig. 16 zeigt in vergrößerter Darstellung das Befestigungsende 78 des Befestigungselements 74. Das Befestigungsende 78 ist aus einer Blechplatte gebildet, die einen Schlitz zum Durchfädeln des Gurts 80 aufweist. Der Gurt 80 bildet eine Schlaufe und ist dadurch mit dem Befestigungsende 78 verbunden. Das Befestigungsende 78 weist eine hakenartige Ausbildung 86 auf, mit der das Befestigungsende 78 in eine passende Durchgangsöffnung am oberen linken Ende des Einbauelements 70 eingehängt ist, siehe auch Fig. 14.

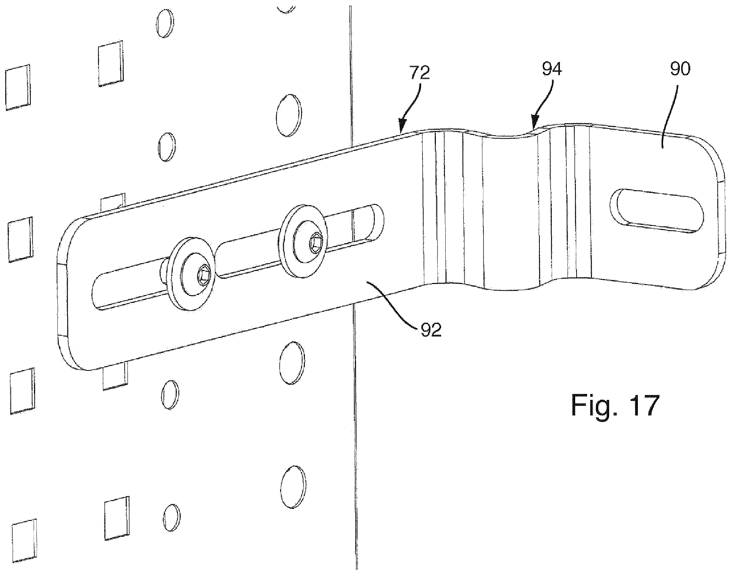

Die Darstellung der Fig. 17 zeigt eines der Befestigungselemente 72 in vergrößerter Darstellung. Das Befestigungselement 72 besteht aus einem gebogenen Blechstreifen, wobei die Befestigungsenden 90, 92 im rechten Winkel zueinander angeordnet sind. Das Befestigungsende 90 weist ein Langloch auf, das Befestigungsende 92 zwei Langlöcher. Der Verbindungsabschnitt 94 ist wellenartig ausgebildet, wobei der Blechstreifen lediglich einen Wellenberg ausbildet. Der Verbindungsabschnitt 94 bildet gleichzeitig einen Absorptionsbereich und eine plastische Verformung des Verbindungsabschnitts 94 erfolgt dadurch, dass der Verbindungsabschnitt 94 gestreckt wird.

Das Befestigungselement 72 zeichnet sich durch eine besonders einfache Herstellung aus. Speziell muss ein Blechstreifen lediglich im Verbindungsabschnitt 94 in die dargestellte wellenartige Form gebogen werden und die Befestigungsenden 90, 92 müssen im rechten Winkel zueinander angeordnet werden. Der Verbindungsabschnitt 94 muss aber nicht in mehrere Blechstreifenabschnitte unterteilt werden.

## Patentansprüche

1. Befestigungselement (72) zum Befestigen von Einbauelementen (70) in Fahrzeugen, insbesondere Regale oder Schränke, wobei das Befestigungselement (72) ein erstes Befestigungsende (90), ein zweites Befestigungsende (92) und einen Verbindungsabschnitt (94) zwischen dem ersten und dem zweiten Befestigungsende aufweist, wobei der Verbindungsabschnitt (94) wenigstens einen Absorptionsbereich aufweist, der beim Überschreiten einer maximalen vordefinierten Haltebelastung zwischen dem ersten Befestigungsende (90) und dem zweiten Befestigungsende (92) nachgibt und sich verformt, wobei der Absorptionsbereich so ausgebildet ist, dass ein Verformungsweg begrenzt ist, wobei sich der Absorptionsbereich beim Überschreiten der maximalen Haltebelastung wenigstens abschnittsweise plastisch verformt, wobei der Absorptionsbereich wenigstens einen gebogenen Blechstreifen aufweist, wobei ein verformter, gestreckter Zustand des Blechstreifens eine Begrenzung des Verformungswegs definiert, **dadurch gekennzeichnet, dass** das erste Befestigungsende (90) ein Langloch aufweist, das zweite Befestigungsende (92) ein Langloch aufweist, das Befestigungselement (72) als einstückiger Blechstreifen ausgebildet ist, der Verbindungsabschnitt (94) im Absorptionsbereich mehrfach gebogen ist, der Verbindungsabschnitt (94) im Absorptionsbereich wellenartig gebogen ist und der Blechstreifen lediglich einen Wellenberg ausbildet.

2. Einbauelement für Fahrzeuge, insbesondere Regal oder Schrank, **gekennzeichnet durch** wenigstens ein Befestigungselement (72) nach Anspruch 1 zum Verbinden des Einbauelements (12) für ein Fahrzeug mit einem Rahmen und/oder einer Karosseriestruktur (10) des Fahrzeugs.

3. Fahrzeug, insbesondere Kraftfahrzeug, mit einem Einbauelement (12) im Innenraum oder Laderaum des Fahrzeugs, **dadurch gekennzeichnet, dass** das Einbauelement (12) mittels wenigstens eines Befestigungselements (72) nach Anspruch 1 mit einem Rahmen und/oder einer Karosseriestruktur des Fahrzeugs verbunden ist.

## Claims

1. Fastening element (72) for fastening installation elements (70) in vehicles, in particular racks or cabinets, wherein the fastening element (72) has a first fastening end (90), a second fastening end (92) and a connecting portion (94) between the first and the second fastening end, wherein the connecting portion (94) has at least one absorption region which, upon exceeding a maximum predefined holding load, yields and deforms between the first fastening end (90) and the second fastening end (92), wherein the absorption region is formed in such a way that a deformation travel is limited, wherein the absorption region deforms plastically at least in certain portions upon exceeding the maximum holding load, wherein the absorption region has at least one bent sheet-metal strip, wherein a deformed, stretched state of the sheet-metal strip defines a limit of the deformation travel, **characterized in that** the first fastening end (90) has an oblong hole, the second fastening end (92) has an oblong hole, the fastening element (72) takes the form of a one-piece sheet-metal strip, the connecting portion (94) is bent multiply in the absorption region, the connecting portion (94) is bent in a corrugated manner and the sheet-metal strip forms merely a corrugation peak.

2. Installation element for vehicles, in particular a rack or cabinet, **characterized by** at least one fastening element (72) according to Claim 1 for connecting the installation element (12) for a vehicle to a frame and/or to a body structure (10) of the vehicle.

3. Vehicle, in particular motor vehicle, having an installation element (12) in the interior or loading compartment of the vehicle, **characterized in that** the installation element (12) is connected to a frame and/or to a body structure of the vehicle by means of at least one fastening element (72) according to Claim 1.

## Revendications

1. Élément de fixation (72) pour la fixation d'éléments encastrables (70) dans des véhicules, notamment d'étagères ou d'armoires, l'élément de fixation (72) comportant une première extrémité de fixation (90), une deuxième extrémité de fixation (92) et une section de jonction (94) entre la première et la deuxième extrémité de fixation, la section de jonction (94) comportant au moins une zone absorbante qui fléchit et se déforme en cas de dépassement d'une charge d'arrêt maximale prédéfinie entre la première extrémité de fixation (90) et la deuxième extrémité de fixation (92), la zone absorbante étant réalisée de telle sorte qu'une course de déformation est délimitée, la zone absorbante se déformant au moins en partie de façon plastique en cas de dépassement de la charge d'arrêt maximale, la zone absorbante comportant au moins une bande de tôle incurvée, un état déformé tendu de la bande de tôle définissant une délimitation de la course de déformation, **caractérisé en ce que** la première extrémité de fixation (90) comporte un trou oblong, la deuxième extrémité de fixation (92) comporte un trou oblong, l'élément de fixation (72) est réalisé sous forme de bande de tôle d'un seul tenant, la section de jonction (94) est incurvée à plusieurs reprises dans la zone absorbante, la section de jonction (94) est incurvée de manière ondulée dans la zone absorbante et la bande de tôle réalise uniquement une crête d'ondulation.

2. Élément encastrable pour véhicules, notamment étagère ou armoire, **caractérisé par** au moins un élément de fixation (72) selon la revendication 1 permettant de relier l'élément encastrable (12) prévu pour un véhicule à un châssis et/ou à une structure de carrosserie (10) du véhicule.

3. Véhicule, notamment véhicule automobile, avec un élément encastrable (12) prévu dans l'habitacle ou dans l'aire de chargement du véhicule, **caractérisé en ce que** l'élément encastrable (12) est relié à un châssis et/ou à une structure de carrosserie du véhicule à l'aide d'au moins un élément de fixation (72) selon la revendication 1.
